(19) Europäisches Patentamt
European Patent Office
Office européen des brevets

(11) **EP 4 727 194 A1**

(12) **DEMANDE DE BREVET EUROPEEN**

(43) Date de publication:
**15.04.2026 Bulletin 2026/16**

(21) Numéro de dépôt: **25208454.6**

(22) Date de dépôt: **14.10.2025**

(51) Classification Internationale des Brevets (IPC):
***H04W 16/18*** *(2009.01)* ***H04W 24/02*** *(2009.01)*

(52) Classification Coopérative des Brevets (CPC):
**H04W 16/18; H04W 24/02**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **14.10.2024 FR 2411054**

(71) Demandeur: **THALES**
**92190 Meudon (FR)**

(72) Inventeurs:
• **KHUC, Doan**
**92622 GENNEVILLIERS CEDEX (FR)**
• **JIA, David**
**92230 GENEVILLIERS (FR)**
• **SCHOLLER, Franck**
**92622 GENNEVILLIERS CEDEX (FR)**
• **CAPDEVIELLE, Véronique**
**92622 GENNEVILLIERS CEDEX (FR)**

(74) Mandataire: **Lavoix**
**2, place d'Estienne d'Orves**
**75441 Paris Cedex 09 (FR)**

(54) **PROCÉDÉ DE DÉTERMINATION D'UNE CONFIGURATION OPTIMALE D'UNE STATION RADIO, PRODUIT PROGRAMME D ORDINATEUR ET DISPOSITIF DE CONFIGURATION ASSOCIÉS**

(57)     Procédé de détermination d'une configuration optimale d'une station radio (12), comprenant :
a) obtention de données géographiques représentatives d'une frontière (24) entre une zone à couvrir (20) et une zone à ne pas couvrir (22),
b) obtention de données radio comprenant des mesures radio réalisées à l'aide d'un dispositif émetteur/récepteur (18) en une pluralité de points (A1, A2, ...) comprenant des points sur la frontière, les mesures radio étant relatives à un ou plusieurs paramètre(s) de signaux radio émis par la station radio dans une configuration initiale et reçus par le dispositif émetteur/récepteur,
c) en utilisant les données radio obtenues, calcul, pour différentes configurations possibles de la station radio, d'un paramètre représentatif d'un taux de couverture de la zone à couvrir et d'un paramètre représentatif d'un taux de couverture de la zone à ne pas couvrir, et sélection de la configuration optimale réalisant un compromis.

FIG.1

EP 4 727 194 A1

**Description**

DOMAINE

La présente invention concerne un procédé de détermination d'une configuration optimale d'une station radio.
L'invention concerne également un produit programme d'ordinateur adapté pour permettre la mise en œuvre un tel procédé, et un système de configuration adapté pour mettre en œuvre un tel procédé.

ART ANTERIEUR

Dans le domaine radio, notamment dans le cadre des stations radio utilisant la technologie 5G ou les technologies ultérieures, il est connu de garantir une couverture radio dans une zone prédéterminée pour des dispositifs récepteurs et émetteurs.
Par exemple, dans la technologie MDT (en anglais *Minimization of Drive Tests*), les dispositifs récepteurs (téléphones mobiles) des utilisateurs envoient des paramètres de réception et les données GPS associées (données de position de l'utilisateur), afin de garantir la bonne qualité de la réception des signaux radio dans une zone prédéterminée.
L'invention s'intéresse au problème nouveau de fournir un procédé et un système de configuration d'une station radio garantissant plutôt la non couverture en dehors d'une zone prédéfinie. En outre, les données de position d'un utilisateur du dispositif émetteur/récepteur ne sont pas disponibles.

RESUME DE L'INVENTION

L'invention a pour objet un procédé de détermination d'une configuration optimale d'une station radio selon la revendication 1.
Suivant d'autres aspects avantageux de l'invention, le procédé comprend une ou plusieurs des caractéristiques correspondant aux revendications 2 à 7, prise(s) isolément ou suivant toutes les combinaisons techniquement possibles.
L'invention a aussi pour objet un produit programme d'ordinateur comportant des instructions logicielles qui, lorsque mises en œuvre par un équipement informatique, mettent en œuvre le procédé tel que décrit ci-dessus.
L'invention a pour objet un dispositif de configuration d'une station radio selon la revendication 9.
L'invention a aussi pour objet un système comprenant une station radio, et un dispositif de configuration tel que décrit ci-dessus.

BREVE DESCRIPTION DES DESSINS

L'invention apparaîtra plus clairement à la lecture de la description qui va suivre, donnée uniquement à titre d'exemple non limitatif, et faite en référence aux dessins annexés, dans lesquels :

la figure 1 est une vue schématique d'une carte montrant un système selon l'invention, une zone à couvrir par la station radio, et une zone à ne pas couvrir ;
la figure 2 est une vue schématique de côté de la station radio représentée sur la figure 1 ; et
la figure 3 est une vue schématique de dessus du système représenté sur la figure 1, montrant un dispositif de configuration selon l'invention.

DESCRIPTION DETAILLEE

Système

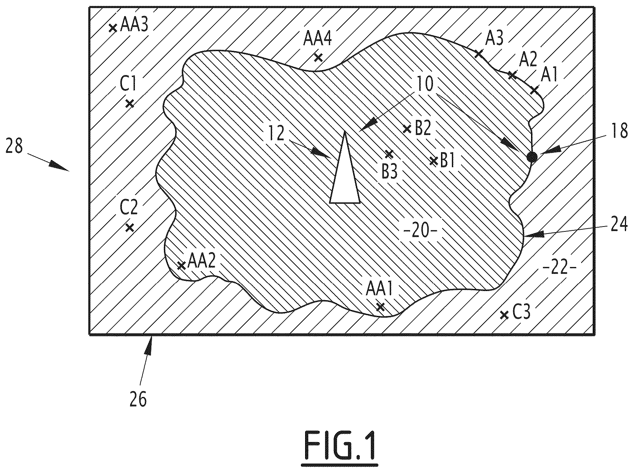

En référence aux figures 1 à 3, on décrit un système 10 selon l'invention.
Le système 10 comprend une station radio 12 adaptée pour émettre des signaux radio 14, et un dispositif de configuration 16 adapté pour déterminer une configuration optimale de la station radio 12. Dans l'exemple, le système 10 comprend aussi un dispositif émetteur/récepteur 18 adapté pour recevoir les signaux radio 14 de la station radio 12, pour réaliser des mesures et avantageusement les envoyer vers la station radio 12.

Station radio

La station radio 12 utilise par exemple la technologie 4G, 5G ou une technologie ultérieure de communication radio. La station radio 12 est de préférence fixe pendant que le procédé est mis en œuvre.
La station radio 12 est destinée, dans sa configuration optimale, à couvrir une zone à couvrir 20, schématisée sur les figures 1 à 3, et à ne pas couvrir une zone à ne pas couvrir 22, la zone à couvrir 20 et la zone à ne pas couvrir 22 définissant entre elles une frontière 24, par exemple une courbe fermée.

Avantageusement, on définit aussi une frontière extérieure 26 de la zone à ne pas couvrir, par exemple une limite sur d'une carte 28.

En variante, la frontière extérieure est définie par une distance donnée de la station radio 12 ou de la frontière 24.

Dans la zone à couvrir 20, un utilisateur (non représenté) est par exemple destiné à recevoir de la station radio 12 des signaux radio d'une puissance supérieure à un seuil de puissance minimale S1 donné.

Dans la zone à ne pas couvrir 22, l'utilisateur est destiné à recevoir de la station radio 12 des signaux radio d'une puissance inférieure à un seuil de puissance maximale S2 donné.

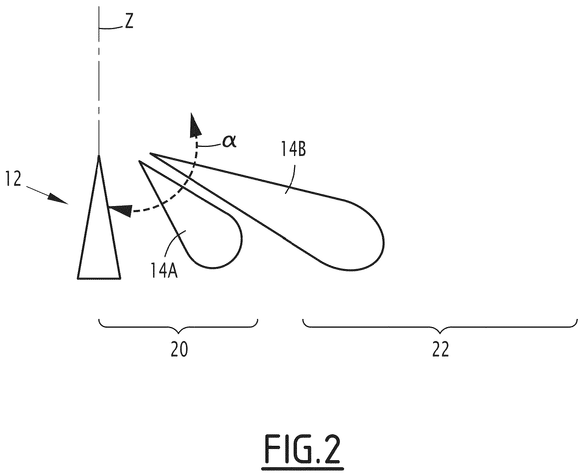

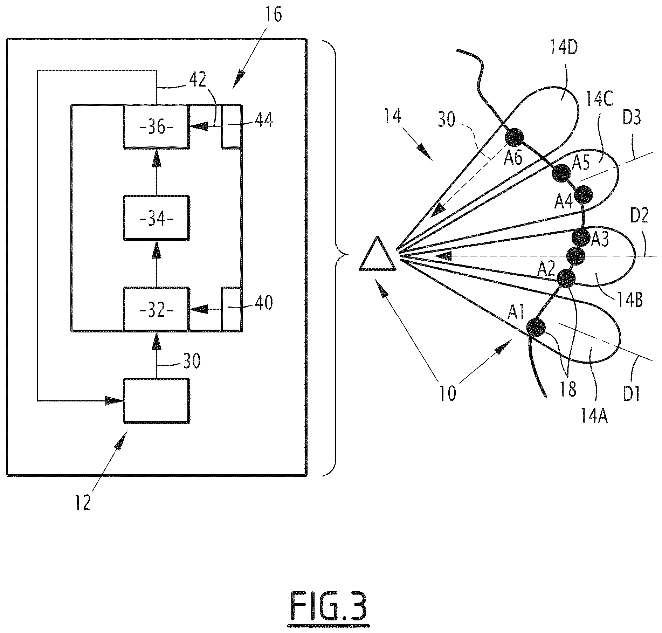

Comme visible sur les figures 2 et 3, la station radio 12 est adaptée pour émettre les signaux radio 14 avantageusement sous forme d'une pluralité de faisceaux 14A, 14B, ...définissant une pluralité de directions distinctes D1, D2, ...en azimut et en élévation (selon la technologie de *beamforming* en anglais, ou formation de faisceaux). Par « élévation », on entend ici un dépointage vertical du faisceau.

La station radio 12 est avantageusement adaptée pour réaliser un balayage azimutal (par *beamforming*) dans la pluralité de directions D1, D2, ....

Ainsi, la station radio 12 est avantageusement configurable en puissance d'émission, inclinaison de l'antenne (en anglais *tilt,* définissant l'angle de l'antenne par rapport à un plan horizontal ou une direction verticale Z).

Si la technologie dite de *beamforming* est disponible, la station radio 12 est avantageusement configurable en puissance d'émission, en angles de visée en azimut et en élévation des faisceaux 14A, 14B, ....

Comme représenté sur la figure 2, selon l'inclinaison $\alpha$, le faisceau 14A permet de couvrir la zone à couvrir 20 sans empiéter sur la zone à ne pas couvrir 22, tandis que le faisceau 14B couvre la zone à ne pas couvrir 22.

En variante non représentée, la station radio 12 n'est pas apte à former une pluralité de faisceaux. La station radio 12 est par exemple omnidirectionnelle. La station radio 12 est alors configurable au moins en puissance des signaux émis.

La station radio 12 est avantageusement adaptée pour recevoir par radio des données radio 30, notamment des mesures radio, provenant du dispositif émetteur/récepteur 18.

Dispositif émetteur/récepteur

Le dispositif émetteur/récepteur 18 est adapté pour réaliser des mesures radio relatives à un ou plusieurs paramètre(s) des signaux radio 14 émis par la station radio 12 dans une configuration initiale et reçus par le dispositif émetteur/récepteur.

Le dispositif émetteur/récepteur 18 est adapté pour envoyer les données radio 30 par radio à la station radio 12. Toutefois, le dispositif émetteur/récepteur 18 n'envoie pas de données représentatives de sa position telles que des données GPS.

Avantageusement, le dispositif émetteur/récepteur 18 permet de réaliser les mesures radio de façon native, par exemple par le standard 3GPP 4G/5G.

Le dispositif émetteur/récepteur 18 est par exemple un téléphone mobile.

Dispositif de configuration

Le dispositif de configuration 16 comprend un module d'entrée 32, un module de calcul 34, et un module de sortie 36.

Le module d'entrée 32 est par exemple connecté à la station radio 12 et adapté pour acquérir des données radio 30. Le module d'entrée 32 est par exemple connecté à une interface homme-machine 40 du dispositif de configuration 16, ou en variante une interface de la station radio 12 pour obtenir des données géographiques représentatives de la frontière 24 par exemple sur la carte 28. Par exemple, les données géographiques sont saisies par un opérateur (non représenté) sur l'interface homme-machine 40.

Le module d'entrée 32 est avantageusement apte à acquérir un ou des paramètres de pondération $\alpha$, ß permettant de configurer le caractère optimal d'une configuration donnée de la station radio 12.

Le module de calcul 34 est adapté pour déterminer une configuration optimale 42 de la station radio 12.

Le module de sortie 36 est apte à fournir la configuration optimale à tout système intéressé, en particulier la station radio 12. Par exemple, le module de sortie 36 est adapté pour fournir la configuration optimale 42 à un écran d'affichage 44 pour l'afficher.

Chacun des modules 32, 34, 36 se présente par exemple sous la forme d'un logiciel mis en œuvre par un processeur adapté. En variante, au moins l'un de ces modules se présente au moins partiellement sous la forme d'un circuit logique programmable, tel qu'un circuit de type FPGA (de l'anglais « Field Programmable Gate Array »).

Fonctionnement du système et procédé de détermination de la configuration optimale

Le fonctionnement du système 10 va maintenant être décrit de manière à illustrer un procédé selon l'invention.

Tout d'abord le module d'entrée 32 acquiert les données géographiques représentatives de la frontière 24, et avantageusement le ou les paramètres de pondération $\alpha$, ß.

En variante, le module d'entrée 32 acquiert des paramètres, autres que des pondérations, permettant de définir une fonction objectif.

Le module d'entrée 32 obtient les données radio 30 comprenant les mesures radio réalisées à l'aide du dispositif émetteur/récepteur 18 en chaque point d'une première pluralité de points A1, A2, ... comprenant des points sur la frontière 24.

En utilisant les données radio 30 obtenues, la configuration optimale 42 de la station radio 12 est déterminée par le module de calcul 34.

La configuration optimale 42 est avantageusement transmise par le module de sortie 36 à la station radio 12 pour être mise en œuvre. Eventuellement, la configuration optimale 42 est affichée sur l'écran 44.

Dans l'exemple, la station radio 12 fonctionne ensuite dans la configuration optimale.

La frontière 24 est par exemple définie sur la carte 28 (figure 1) comme un ensemble de N points dans un référentiel prédéterminé.

Par exemple, Frontière = {(Lat, Lon) , i = 1...N} où Lat est la latitude et Lon est la longitude des points.

Selon un autre exemple, Frontière = $\{(x,z)_i$ , i = 1...N} dans un repère local (non représenté).

La frontière 24 peut avoir une forme quelconque, notamment irrégulière.

La première pluralité de points A1, A2, ... comprend par exemple des points répartis, avantageusement uniformément, sur la frontière 24. Avantageusement, la première pluralité de points A1, A2, ... comprend au moins un point, de préférence plusieurs points, par faisceau 14A, 14B, ... de la station radio 12.

Selon un mode de réalisation particulier, la première pluralité de points A1, A2, ... comprend en outre un ou plusieurs points AA1, AA2, ... situés dans la zone à couvrir 20 et/ou dans la zone à ne pas couvrir.

Les mesures radio sont relatives à un ou plusieurs paramètre(s) des signaux radio 14 émis par la station radio 12 dans une configuration initiale et reçus par le dispositif émetteur/récepteur 18.

Le ou les paramètres mesurés concernent les communications en lien descendant (en anglais *downlink*) et sont représentatifs de la qualité radio, comme le RSRP (en anglais *Reference Signal Received Power,* ou puissance reçue du signal de référence), éventuellement le RSRQ (en anglais *Reference Signal Received Quality*, ou qualité reçue du signal de référence), le CQI (en anglais *Channel Quality Indicator*, ou indicateur de qualité de chaîne), et le MCS (en anglais *Modulation Coding Scheme*, schéma de code de modulation). Dit autrement, le ou les paramètres mesurés comprennent un ou des indicateurs de qualité des signaux 14 reçus par le dispositif émetteur/récepteur 18.

D'autres paramètres éventuellement mesurés sont représentatifs d'une distance à la station radio 12, comme l'avance temporelle (en anglais *Timing Advance*).

Dans l'exemple, l'obtention des données radio 30 comprend une émission des signaux radio 14 par la station radio 12 dans la configuration initiale, une réception desdits signaux radio 14 par le dispositif émetteur/récepteur 18, et une mesure desdits un ou plusieurs paramètres par le dispositif émetteur/récepteur 18 en chaque point de la première pluralité de points A1, A2... afin de générer les mesures radio. Les données radio 30 sont avantageusement collectées par la station radio 12 et fournies au dispositif de configuration 16.

Ainsi, le dispositif émetteur/récepteur 18 est déplacé par un utilisateur dans chacun des endroits correspondant aux points A1, A2....

En variante, plusieurs dispositifs émetteurs/récepteurs analogues au dispositif 18 peuvent être utilisés pour réaliser les mesures.

En variante, les données radio 30 sont réalisées à l'avance et disponibles par exemple sous la forme d'un fichier.

Si la station radio 12 est adaptée pour former une pluralité de faisceaux 14A, 14B ... (*beamforming*), les données radio 30 obtenues sont avantageusement configurées pour associer les mesures radio à des identifiants représentatifs des faisceaux 14A, 14B,....

Avantageusement, pour chaque point de la première pluralité de points A1, A2..., si les mesures radio sont meilleures pour un ou plusieurs des faisceaux 14A, 14B... que pour les autres des faisceaux, les données radio 30 obtenues sont configurées pour indiquer le ou les identifiants représentatifs desdit(s) un ou plusieurs des faisceaux.

Ceci permet par exemple de remonter à la station radio 12 l'identifiant du faisceau pour lequel la qualité de réception est la meilleure, ou toute information permettant de localiser en azimut le dispositif de réception 18 lors de la mesure.

Avantageusement, chacune des mesures radio est associée à un identifiant de faisceau. Toutes les mesures radio associées à un même faisceau sont par exemple agrégées dans un même ensemble de données.

Si la station radio 12 n'est pas adaptée pour former plusieurs faisceaux 14A, 14B..., toutes les mesures radio sont agrégées dans un ensemble unique (et non dans des ensembles distincts correspondant à des faisceaux distincts).

Dans un mode de réalisation avec *beamforming,* la station radio 12 émet successivement dans une pluralité de directions azimutales pour balayer une portion d'espace avec une élévation donnée. En chaque point de la première pluralité de points, notamment sur la frontière 24, le dispositif émetteur/récepteur 18 envoie les meilleures mesures radio à la station radio 12, par exemple le meilleur RSRP correspondant au meilleur des faisceaux reçus. Ce meilleur faisceau reçu indique que le dispositif émetteur/récepteur 18 se situe plutôt dans la direction azimutale correspondant à ce faisceau.

A la fin de ce processus, un ensemble de mesures radio associées à chaque direction azimutale, pour une élévation donnée, aura été collecté.

Ensuite, le calcul de la configuration optimale indique par exemple quelle est la meilleure élévation pour chaque direction azimutale afin maximiser la couverture radio en deçà de la frontière 24 (zone à couvrir 20) et de la minimiser au-delà (zone à ne pas couvrir 22).

Le module de calcul 34 utilise les données radio 30 et calcule, pour différentes configurations possibles de la station radio 12, un taux de couverture de la zone à couvrir 20 et un taux de couverture de la zone à ne pas couvrir 22, et sélectionne la configuration optimale 42.

La configuration optimale 42 réalise un compromis entre une maximisation du taux de couverture de la zone à couvrir 20 et une minimisation du taux de couverture de la zone à ne pas couvrir 22.

Le taux de couverture de la zone à couvrir 20 est par exemple calculé sur une deuxième pluralité de points situés B1, B2... dans la zone à couvrir 20, et le taux de couverture de la zone à ne pas couvrir 22 est calculé sur une troisième pluralité de points C1, C2, ... situés dans la zone à ne pas couvrir 22.

La deuxième pluralité de points B1, B2... est par exemple répartie sur la zone à couvrir 20.

La troisième pluralité de points C1, C2, ... est par exemple répartie sur la zone à ne pas couvrir 22.

Avantageusement, les calculs comprennent l'obtention de valeurs calculées représentatives, en chaque point de la deuxième pluralité de points B1, B2, ... et de la troisième pluralité de points C1, C2, ..., d'au moins un des paramètres mesurés. Les calculs sont effectués à partir des mesures radio 30 et pour une pluralité de configurations possibles (configurations candidates) de la station radio 12 selon des méthodes connues en elles-mêmes de l'homme du métier.

Par exemple, pour le RSRP, une première méthode consiste à corriger/calibrer un modèle d'affaiblissement (par exemple un modèle *Path Loss* de type Longley Rice) à partir des mesures radio (réalisées en quelques points) et, à partir de ce modèle, en déduire la puissance reçue en deçà et au-delà de la frontière 24, c'est-à-dire pour des distances inférieures et supérieures à la distance séparant la station radio 12 du point de mesure considéré. Cette distance est par exemple déduite de l'avance temporelle (*Timing Advance*). Connaissant la puissance d'émission, et le *'Path Loss'* en fonction de distance, on calcule la puissance reçue.

Une deuxième méthode s'appuie sur les principes d'IA (intelligence artificielle) générative, par exemple de type GAN (*Generative Adversarial Network* ou Réseau contradictoire génératif) pour augmenter le nombre de données (*data augmentation*) équivalentes à des mesures sur les zones considérées, pour des configurations candidates.

Les mesures citées (RSRP, RSRQ, CQI, MCS) sont plus ou moins liées entre elles et donnent une estimation de la qualité du signal 14 et de la liaison entre station radio 12 et le dispositif émetteur/récepteur 18. Donc, des calculs de correction/calibration sont effectués, il est avantageux de prendre en compte ces quatre mesures. Augmenter à quatre le nombre de paramètres mesurés permet d'avoir une idée plus précise de la qualité du signal.

La maximisation et la minimisation des taux de couverture étant antagonistes, notamment près de la frontière 24, chacune d'elles est éventuellement relative. Dit autrement, un compromis est réalisé entre une bonne couverture de la zone à couvrir 20 et une non couverture de la zone à ne pas couvrir 22.

Une fonction objectif est optimisée, la fonction objectif réalisant une pondération, de préférence configurable, entre la maximisation du taux de couverture calculé sur la deuxième pluralité de points B1, B2, ... et la minimisation du taux de couverture calculé sur la troisième pluralité de points C1, C2, ....

Par exemple,

$$f = \alpha . \sum_{i=1}^{N_{IN}} \mathbf{1}_{\{couverture\}}\left(R_{i,IN}\right) + \beta . \sum_{i=1}^{N_{OUT}} \mathbf{1}_{\{non\ couverture\}}\left(R_{i,OUT}\right)$$

où :

f est une fonction objectif à maximiser dans l'exemple,

$\alpha$, $\beta$ sont les paramètres de pondération, $\alpha$, $\beta$ étant positifs avec par exemple $\alpha + \beta = 1$,

i est un indice des points considérés,

$N_{IN}$ est le nombre de points B1, B2, ... de la deuxième pluralité situés dans la zone à couvrir 20 (IN),

$R_{i,IN}$ représente une puissance reçue au point i dans la zone à couvrir 20,

$1_{\{couverture\}}$ est une fonction valant 1 si la puissance reçue $R_{i,IN}$ est supérieure au seuil de puissance minimale S1, et 0 sinon,

$N_{OUT}$ est le nombre de points C1, C2, ... de la troisième pluralité situés dans la zone à ne pas couvrir 22 (OUT),
$R_{i,OUT}$ représente une puissance reçue au point i dans la zone à ne pas couvrir 22,
$\mathbf{1}_{\{non\,couverture\}}$ est une fonction valant 1 si la puissance reçue $R_{i,OUT}$ est inférieure au seuil de puissance maximale S2, et 0 sinon.

La pondération dépend par exemple de priorités opérationnelles : garantie plus ou moins stricte de non-couverture dans la zone à ne pas couvrir 22, et garantie plus ou moins forte de couverture de la zone à couvrir 20.

A partir de la formule ci-dessus, la personne du métier peut facilement définir :

- un taux de couverture de la zone à couvrir 20 par exemple par la formule suivante :

$$\left[\sum_{i=1}^{N_{IN}} \mathbf{1}_{\{couverture\}}(R_{i,IN})\right]/N_{IN}$$

- un taux de non-couverture de la zone à ne pas couvrir 22 par exemple par la formule suivante :

$$\left[\sum_{i=1}^{N_{OUT}} \mathbf{1}_{\{non\,couverture\}}(R_{i,OUT})\right]/N_{OUT}$$

- et donc un taux de couverture de la zone à ne pas couvrir 22 par exemple par la formule suivante :

$$1 - \left[\sum_{i=1}^{N_{OUT}} \mathbf{1}_{\{non\,couverture\}}(R_{i,OUT})\right]/N_{OUT}$$

Le seuil de puissance minimale S1 vaut par exemple -80 dBm.

Le seuil de puissance maximale S2 vaut par exemple -90 dBm.

Si les mesures radio comprennent, pour chaque point A1, A2, ... de la première pluralité de points, un paramètre représentatif d'une avance temporelle (*Timing Advance*), le paramètre est avantageusement utilisé pour calculer une distance ou un affaiblissement de propagation relatifs à au moins l'un des faisceaux 14A, 14B, ... afin d'obtenir les valeurs calculées.

Par exemple, l'avance temporelle est utilisée afin de déterminer la distance (en anglais *path loss*) des mesures relatives à un faisceau. Ceci permet corriger les valeurs calculées de RSRP (*path loss* pseudo statistiques de type Longley Rice ou autre) et en connaissance d'un diagramme de rayonnement de chaque faisceau 14A, 14B, ... de la station radio 12.

Le *path loss* est l'affaiblissement de propagation : affaiblissement de puissance lorsqu'elle parcourt une certaine distance. Cet affaiblissement dépend aussi de la fréquence, des caractéristiques de l'environnement (obstacles, etc...). Pour calculer la puissance reçue en fonction de la puissance d'émission et du *Path Loss,* on peut recourir à l'équation de Friis.

Par exemple, à partir des valeurs mesurées de RSRP associées à une avance temporelle (TA) :

- on déduit de TA la distance d approximative à la station radio 12,
- on a donc RSRP (mesuré) à distance d,
- il est possible d'avoir une estimation du *Path Loss* à la distance d par différence entre puissance émise et puissance reçue. Cette différence tient compte des gains d'antenne et de *beamforming* le cas échéant.

On a donc *Path Loss* réel (distance d) pour un ensemble de mesures, donc de distances d.

Il est alors possible de calibrer un modèle (statistique / pseudo statistique) de *Path Loss* (PL) à partir des mesures terrain.

On en déduit alors par le calcul le RSRP (en toute position) = Puissance émise - PL calculé (pour toutes positions).

Des méthodes par apprentissage (supervisé ou par IA générative) peuvent aussi être utilisées pour obtenir les valeurs calculées. On fait ici référence à des méthodes d'augmentation de données de type IA Générative mentionnées plus haut : à partir d'une carte faiblement échantillonnée de mesures RSRP, on déduit par IA Générative une carte RSRP échantillonnée plus finement.

Le module de calcul sélectionne par exemple la configuration la meilleure pour le ou chaque faisceau 14A, 14B, ..., afin de maximiser l'objectif, dans l'exemple la fonction f.

Si le nombre de configurations par faisceau 14A, 14B, ... n'est pas trop élevé, une recherche exhaustive est réalisée. Dans le cas contraire, une autre méthode, par exemple une optimisation combinatoire, avantageusement de type DRL (en anglais *Deep Reinforcement Learning*, ou apprentissage par renforcement profond), peut être utilisée.

Avantages

Grâce aux caractéristiques décrites ci-dessus, le procédé de configuration garantit un degré voulu de non couverture en dehors d'une zone prédéfinie 20, sur la zone à ne pas couvrir 22. En outre, le procédé n'utilise pas les données (GPS) de position d'un utilisateur du dispositif émetteur/récepteur 18, qui n'ont pas à être transmises.

Le procédé vise à limiter la couverture radio sur des zones prédéterminées et à garantir une réception très faible au-delà, ce qui permet une économie d'énergie, une limitation d'interférences, et une discrétion électromagnétique.

Le procédé permet à la station radio 12 de se reconfigurer de façon autonome pour limiter une couverture radio à une zone prédéfinie.

**Revendications**

**1.** Procédé de détermination d'une configuration optimale (42) d'une station radio (12), comprenant les étapes suivantes :

a) obtention de données géographiques représentatives d'une frontière (24) entre une zone à couvrir (20) par la station radio (12) et une zone à ne pas couvrir (22) par la station radio (12),
b) obtention de données radio (30) comprenant des mesures radio réalisées à l'aide d'un dispositif émetteur/récepteur (18) en chaque point d'une première pluralité de points (A1, A2, ...) comprenant des points sur la frontière (24), les mesures radio étant relatives à un ou plusieurs paramètre(s) de signaux radio (14) émis par la station radio (12) dans une configuration initiale et reçus par le dispositif émetteur/récepteur (18), et
c) en utilisant les données radio (30) obtenues, calcul, pour différentes configurations possibles de la station radio (12), d'un paramètre représentatif d'un taux de couverture de la zone à couvrir (20) et d'un paramètre représentatif d'un taux de couverture de la zone à ne pas couvrir (22), et sélection de la configuration optimale (42) réalisant un compromis entre une maximisation du taux couverture de la zone à couvrir (20) et une minimisation du taux de couverture de la zone à ne pas couvrir (22),

dans lequel, à l'étape de détermination, une fonction objectif (f) est optimisée, la fonction objectif (f) réalisant une pondération, de préférence configurable, entre la maximisation du taux de couverture calculé sur la deuxième pluralité de points (B1, B2,...) et la minimisation du taux de couverture calculé sur la troisième pluralité de points (C1, C2,...).

**2.** Procédé selon la revendication 1, dans lequel le calcul comprend, pour les configurations possibles, l'obtention de valeurs calculées représentatives d'au moins certains desdits paramètres en chaque point d'une deuxième pluralité de points (B1, B2, ...) situés dans la zone à couvrir (20) et en chaque point d'une troisième pluralité (C1, C2, ...) de points situés dans la zone à ne pas couvrir (22), en utilisant les données radio (30).

**3.** Procédé selon la revendication 2, dans lequel la station radio (12) est adaptée pour former une pluralité de faisceaux (14A, 14B, ...) définissant une pluralité de directions (D1, D2, ...) distinctes en azimut, chacune des mesures radio étant relative à un faisceau reçu par le dispositif émetteur/récepteur (18) parmi les faisceaux (14A, 14B, ...), les données radio (30) obtenues comprenant des identifiants, chacun des identifiants étant représentatif d'un des faisceaux (14A, 14B, ...), chacune des mesures radio étant associée à l'un des identifiants pour indiquer le faisceau reçu.

**4.** Procédé selon la revendication 3, dans lequel les identifiants indiquent, pour chaque point de la première pluralité de points (A1, A2, ...), celui des faisceaux (14A, 14B,...) que le dispositif émetteur/récepteur (18) a le mieux reçu en ledit chaque point en comparaison avec les autres des faisceaux (14A, 14B, ...).

**5.** Procédé selon la revendication 3 ou 4, dans lequel les mesures radio comprennent, pour chaque point de la première pluralité de points (A1, A2, ...), un paramètre représentatif d'une avance temporelle, le paramètre étant utilisé pour calculer un affaiblissement d'au moins l'un des faisceaux (14A, 14B, ...) en ledit chaque point afin d'obtenir lesdites valeurs calculées.

**6.** Procédé selon l'une quelconque des revendications 1 à 5, comprenant un affichage de paramètres représentatifs de la configuration optimale (42), et/ou une mise de la station radio (12) dans la configuration optimale (42).

7. Procédé selon l'une quelconque des revendications 1 à 6, dans lequel l'obtention des données radio (30) comprend une émission desdits signaux radio (14) par la station radio (12) dans la configuration initiale, une réception desdits signaux radio (14) par le dispositif émetteur/récepteur (18), une mesure desdits un ou plusieurs paramètres par le dispositif émetteur/récepteur (18) en chaque point de la première pluralité de points (A1, A2, ...) afin de générer les mesures radio.

8. Produit programme d'ordinateur comportant des instructions logicielles qui, lorsque mises en œuvre par un équipement informatique, mettent en œuvre un procédé selon l'un quelconque des revendications 1 à 5.

9. Dispositif de configuration (16) d'une station radio (12), le dispositif de configuration (16) étant adapté pour mettre en œuvre un procédé selon l'une quelconque des revendications 1 à 5, le dispositif de configuration (16) comprenant un module d'entrée (32) adapté pour obtenir les données géographiques et les données radio (30), un module de calcul (34) adapté pour déterminer la configuration optimale (42), et un module de sortie (36) adapté pour fournir la configuration optimale (42).

10. Système (10) comprenant une station radio (12), et un dispositif de configuration (16) selon la revendication 9.

## FIG.1

FIG.2

FIG.3

## RAPPORT DE RECHERCHE EUROPEENNE

**Numéro de la demande**

EP 25 20 8454

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 11 889 407 B2 (RAKUTEN MOBILE INC [JP]) 30 janvier 2024 (2024-01-30) * colonne 2, ligne 18 - colonne 16, ligne 45; revendications 1-20; figures 1-8 * ----- | 1-10 | INV. H04W16/18 H04W24/02 |
| X | US 9 265 076 B2 (SCHMIDT ANDREAS [DE]; CHOU JOEY [US] ET AL.) 16 février 2016 (2016-02-16) * colonne 1, ligne 11 - ligne 34 * * colonne 2, ligne 62 - colonne 12, ligne 43; revendications 1-24; figures 1-20 * ----- | 1-10 | |

**DOMAINES TECHNIQUES RECHERCHES (IPC)**

H04W

Le présent rapport a été établi pour toutes les revendications

| Lieu de la recherche | Date d'achèvement de la recherche | Examinateur |
|---|---|---|
| Berlin | 31 janvier 2026 | López Pérez, Mariano |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 20 8454

La présente annexe indique les membres de la famille de brevets relatifs aux documents brevets cités dans le rapport de recherche visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2026

| Document brevet cité au rapport de recherche | | Date de publication | Membre(s) de la famille de brevet(s) | | Date de publication |
|---|---|---|---|---|---|
| US 11889407 | B2 | 30-01-2024 | EP | 4461020 A1 | 13-11-2024 |
| | | | JP | 7681191 B2 | 21-05-2025 |
| | | | JP | 2024538567 A | 23-10-2024 |
| | | | US | 2023217357 A1 | 06-07-2023 |
| | | | WO | 2023132851 A1 | 13-07-2023 |
| US 9265076 | B2 | 16-02-2016 | CN | 105325029 A | 10-02-2016 |
| | | | CN | 105340203 A | 17-02-2016 |
| | | | CN | 105340332 A | 17-02-2016 |
| | | | CN | 105340339 A | 17-02-2016 |
| | | | CN | 105359424 A | 24-02-2016 |
| | | | CN | 105359429 A | 24-02-2016 |
| | | | CN | 105359492 A | 24-02-2016 |
| | | | CN | 105359561 A | 24-02-2016 |
| | | | CN | 105379147 A | 02-03-2016 |
| | | | CN | 105453635 A | 30-03-2016 |
| | | | CN | 109660286 A | 19-04-2019 |
| | | | EP | 3025435 A1 | 01-06-2016 |
| | | | EP | 3025440 A1 | 01-06-2016 |
| | | | EP | 3025441 A1 | 01-06-2016 |
| | | | EP | 3025445 A1 | 01-06-2016 |
| | | | EP | 3025484 A1 | 01-06-2016 |
| | | | EP | 3025533 A1 | 01-06-2016 |
| | | | EP | 3025540 A1 | 01-06-2016 |
| | | | EP | 3025542 A1 | 01-06-2016 |
| | | | EP | 3025546 A1 | 01-06-2016 |
| | | | EP | 3025553 A1 | 01-06-2016 |
| | | | EP | 3025555 A1 | 01-06-2016 |
| | | | EP | 3840479 A1 | 23-06-2021 |
| | | | ES | 2685052 T3 | 05-10-2018 |
| | | | ES | 2688596 T3 | 05-11-2018 |
| | | | FI | 3840479 T3 | 17-04-2024 |
| | | | HK | 1220845 A1 | 12-05-2017 |
| | | | HK | 1220847 A1 | 12-05-2017 |
| | | | HK | 1220848 A1 | 12-05-2017 |
| | | | HK | 1221081 A1 | 19-05-2017 |
| | | | HK | 1221082 A1 | 19-05-2017 |
| | | | HK | 1221090 A1 | 19-05-2017 |
| | | | HK | 1221108 A1 | 19-05-2017 |
| | | | HK | 1221563 A1 | 02-06-2017 |
| | | | HK | 1222048 A1 | 16-06-2017 |
| | | | HK | 1222499 A1 | 30-06-2017 |
| | | | HU | E039481 T2 | 28-01-2019 |
| | | | HU | E040202 T2 | 28-02-2019 |
| | | | JP | 6163677 B2 | 19-07-2017 |
| | | | JP | 6224239 B2 | 01-11-2017 |

EPO FORM P0460

Pour tout renseignement concernant cette annexe : voir Journal Officiel de l'Office européen des brevets, No.12/82

page 1 de 2

## ANNEXE AU RAPPORT DE RECHERCHE EUROPEENNE
## RELATIF A LA DEMANDE DE BREVET EUROPEEN NO.

EP 25 20 8454

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2026

| Document brevet cité au rapport de recherche | Date de publication | Membre(s) de la famille de brevet(s) | Date de publication |
|---|---|---|---|
| | | JP 2016529775 A | 23-09-2016 |
| | | JP 2016530754 A | 29-09-2016 |
| | | KR 20160005109 A | 13-01-2016 |
| | | KR 20160014003 A | 05-02-2016 |
| | | KR 20170051535 A | 11-05-2017 |
| | | KR 20170127049 A | 20-11-2017 |
| | | TW 201517577 A | 01-05-2015 |
| | | TW 201519668 A | 16-05-2015 |
| | | TW 201521483 A | 01-06-2015 |
| | | TW 201521495 A | 01-06-2015 |
| | | TW 201642701 A | 01-12-2016 |
| | | TW 201811092 A | 16-03-2018 |
| | | US 2015029875 A1 | 29-01-2015 |
| | | US 2015029879 A1 | 29-01-2015 |
| | | US 2015029910 A1 | 29-01-2015 |
| | | US 2015029918 A1 | 29-01-2015 |
| | | US 2015029936 A1 | 29-01-2015 |
| | | US 2015029955 A1 | 29-01-2015 |
| | | US 2015029956 A1 | 29-01-2015 |
| | | US 2015029957 A1 | 29-01-2015 |
| | | US 2015031308 A1 | 29-01-2015 |
| | | US 2016142961 A1 | 19-05-2016 |
| | | US 2016295597 A1 | 06-10-2016 |
| | | US 2016374141 A1 | 22-12-2016 |
| | | US 2017111830 A1 | 20-04-2017 |
| | | US 2017188373 A1 | 29-06-2017 |
| | | US 2018338313 A1 | 22-11-2018 |
| | | US 2020359388 A1 | 12-11-2020 |
| | | WO 2015012900 A1 | 29-01-2015 |
| | | WO 2015013038 A1 | 29-01-2015 |
| | | WO 2015013189 A1 | 29-01-2015 |
| | | WO 2015013190 A1 | 29-01-2015 |
| | | WO 2015013192 A1 | 29-01-2015 |
| | | WO 2015013193 A1 | 29-01-2015 |
| | | WO 2015013194 A1 | 29-01-2015 |
| | | WO 2015013563 A1 | 29-01-2015 |
| | | WO 2015013567 A1 | 29-01-2015 |
| | | WO 2015013580 A1 | 29-01-2015 |
| | | WO 2015013650 A1 | 29-01-2015 |

EPO FORM P0460

Pour tout renseignement concernant cette annexe : voir Journal Officiel de l'Office européen des brevets, No.12/82

page 2 de 2